# EUROPEAN PATENT SPECIFICATION

(11) **EP 0 340 875 B1**
(45) Date of publication and mention of the grant of the patent: **21.07.1993**
(21) Application number: 89201134.7
(22) Date of filing: 03.05.1989
(51) Int. Cl.: A01F 12/18, A01D 41/12

(54) **Axial flow harvesting machine**
Axial-Fluss-Erntemaschine
Moissonneuse à écoulement axial

(30) Priority: 06.05.1988 GB 8810760
(43) Date of publication of application: 08.11.1989
(73) Proprietor: NEW HOLLAND BELGIUM N.V., B-8210 Zedelgem (BE)
(72) Inventor: Strong, Russell W., B-8000 Brugge (BE); Van Quekelberghe, Eric P.J., B-8350 Damme (BE)
(74) Representative: Vandenbroucke, Alberic

(56) References cited:
- EP-A- 0 216 060
- GB-A- 1 399 602
- US-A- 4 505 279

## Description

This invention relates to axial flow harvesting machines and more particularly, although not exclusively, to axial flow combine harvesters.

In conventional combine harvesters, crop material is fed between a threshing cylinder and an associated concave, whereby it is threshed over a comparatively short distance, a typical concave extending over an arc of about 100°. In axial flow machines, crop material is subjected to a much longer threshing and separating action than in a conventional machine of comparable size and, therefore, the efficiency of axial flow machines is greater because grain losses are reduced.

Nevertheless, there are problems associated with axial flow machines which mitigate against this basic advantage. For example, the power requirement of an axial flow machine is greater than that of a comparable conventional machine due to the sustained threshing and separating action and difficulties can be experienced when a given machine is used to harvest different types of crop and in different conditions of crop.

Clearly, it is highly desirable to provide a basic machine which can be adopted with ease to handle different types and conditions of crop. It is essential to keep grain losses to an acceptable minimum and also to achieve a smooth flow of crop material through the threshing and separating mechanisms. In the latter respect, if an amount of crop material or a piece of foreign matter ceases moving through the threshing and separating sections, a major obstruction can soon accumulate resulting in jamming or plugging of the rotor, the consequences of which can be serious in terms of down-time of the machine.

This problem may occur with the arrangement according to EP-A-0,216,060 which proposes an axial flow threshing and separating rotor with a plurality of threshing members provided around the periphery thereof and staggered both axially and circumferentially with respect to each other. In this arrangement, there are, as seen in the axial direction of the rotor, gaps between the adjacent threshing members which can trap crop material and cause hesitation of crop flow, possibly leading to eventual plugging of the rotor.

Similar problems may also be experienced with a combine harvester having an axial flow rotor according to e.g. Figures 15 and 17 of GB-A-1.399.602; said rotor having a plurality of threshing members arranged in axially extending rows and adjacent threshing members, in said rows, defining gaps therebetween, which, as in the arrangement according to EP-A-0.216.060, also can trap crop material.

The object of the present invention is to provide an axial flow harvesting machine which provides for a smoother flow of crop material and thus improves the functional efficiency of the rotors.

According to the present invention there is provided an axial flow harvesting machine comprising at least one generally cylindrical rotor mounted within a casing; said rotor having a plurality of threshing means around its periphery with adjacent ones of said threshing means being staggered both axially and circumferentially of the rotor and said rotor together with said threshing means thereon being operable, in conjunction with said casing, to thresh and separate grain from straw material and said harvesting machine being characterised in that adjacent threshing means overlap both axially and circumferentially of said rotor.

The crop threshing means may be in the form of pairs of leading and trailing rasp bars with the trailing rasp bar of one pair overlapping the leading rasp bar of the adjacent pair both axially and circumferentially of said rotor.

An axial flow combine harvester in accordance with the present invention will now be described in greater detail, by way of example, with reference to the accompanying drawings, in which:
Figure 1 is a diagrammatic side view of the combine harvester,
Figure 2 is a side view of one of two rotors of the combine harvester of Figure 1 without any members for operating on the crop material shown mounted thereon,
Figure 3 is a perspective view of the rotor of Figure 2 showing members for operating on the crop material mounted thereon,

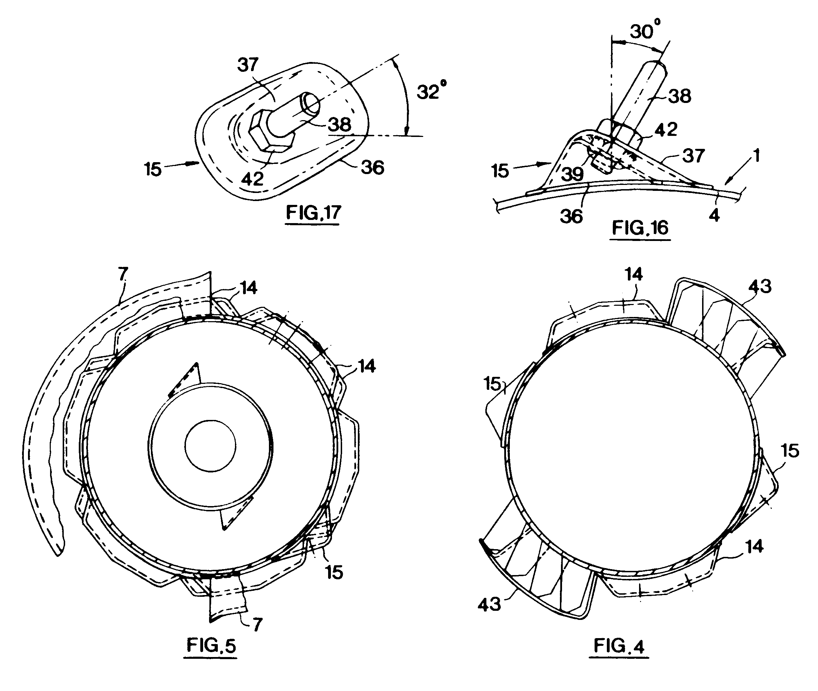

Figure 4 is a section on the line IV-IV of Figure 2,
Figure 5 is mainly a sectional view taken along the line V-V of Figure 2 and additionally also shows portions of the rotor as seen in end view in the direction of arrow F.
Figure 6 is a development of the rotor of Figure 2 showing illustrative arrangements of different members for operating on crop material,
Figure 7 is a side view of mounting means for rasp bars,
Figure 8 is a plan view of Figure 7,
Figure 9 is a plan view of a leading rasp bar,
Figure 10 is a section on the line X-X of Figure 9,
Figure 11 is a plan view of a trailing rasp bar,
Figure 12 is a section on line XII-XII of Figure 11,
Figure 13 is a section through part of the rotor of Figure 2 showing a leading rasp bar and a trailing rasp bar mounted on common mounting means,
Figure 14 is a cross sectional view of mounting means for a crop thinning element,
Figure 15 is a plan view of the mounting means of Figure 14,
Figure 16 is a side view of the mounting means of Figures 14 and 15 showing a crop thinning element mounted thereon,
Figure 17 is a perspective view of Figure 16,
Figure 18 is a plan view of an alternative element for operating on crop material, and
Figure 19 is a detail to a larger scale of Figure 6.

The terms "grain", "straw", and "tailings" are used principally throughout this specification for convenience and it is to be understood that these terms are not intended to be limiting. Thus "grain" refers to that part of the crop material which is threshed and separated from the discardable part of the crop material which is referred to as "straw". Incompletely threshed crop material is referred to as "tailings".

Also the terms "forward", "rearward", "left", and "right", when used in connection with the combine harvester and/or Components thereof are determined with reference to the direction of forward operative travel of the combine harvester but again, should not be construed as limiting.

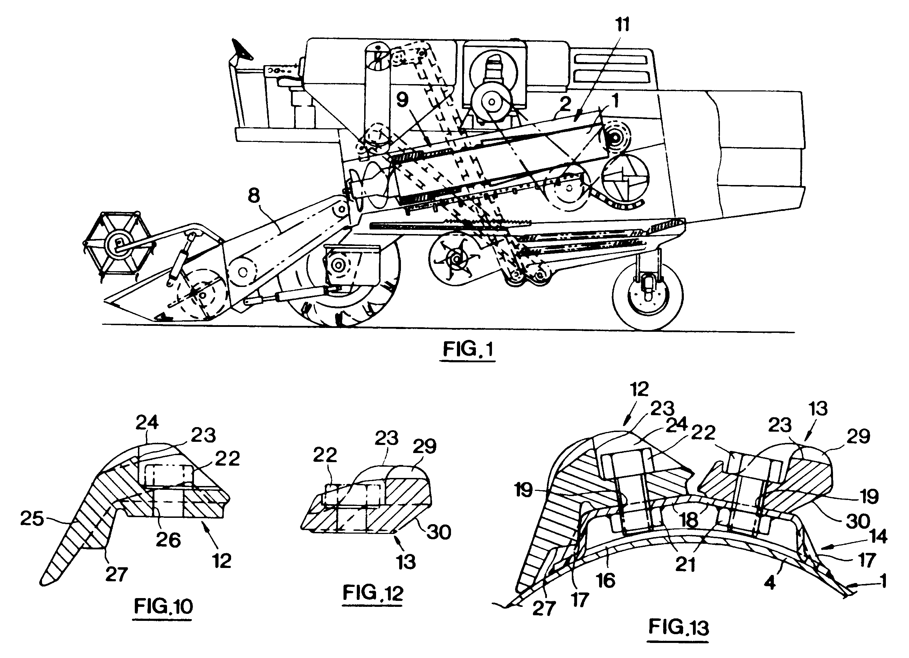

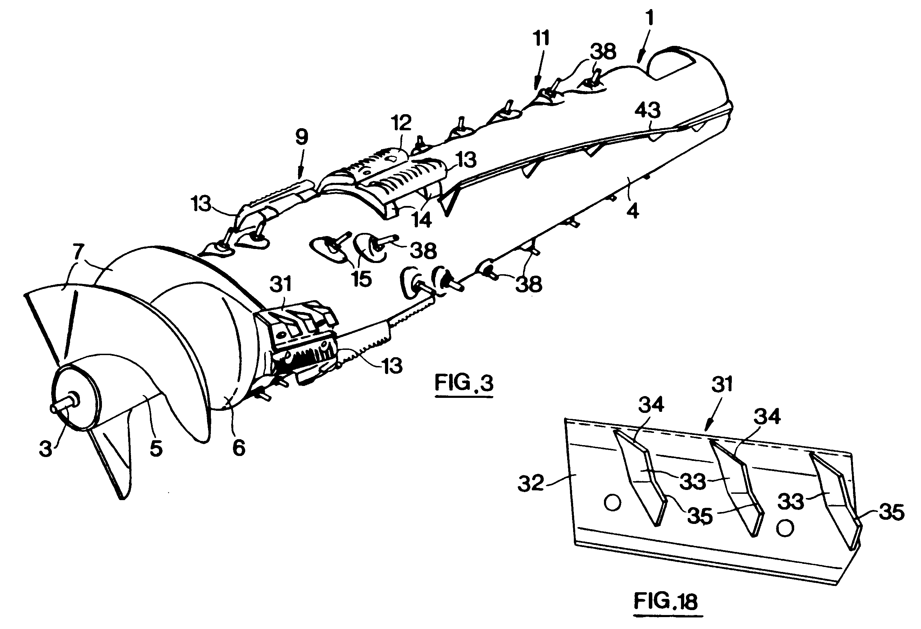

Turning now to Figure 1 of the accompanying drawings, the basic machine is well known and is described, for example, in GB-A-1,399,601 which is herein incorporated by reference. As described in GB-A-1,399,601, the combine harvester has a twin threshing and separating mechanism by way of right-hand and left-hand threshing and separating units each comprising a generally cylindrical rotor 1 mounted within a common, and generally correspondingly shaped, chamber 2. The inner surface of the chamber 2 is provided with helical fins in order to impart a helical and generally axial flow of crop material along the respective rotors 1 as is well known. Each rotor 1 is mounted for rotation on a forward and rearward stub shaft 3, of which only the forward stub shaft is shown in Figure 3 of the drawings. The main body of each rotor 1 is a cylindrical tube 4 mounted on discs (not shown) supported on the respective stub shafts, and the forward end of each rotor is provided with an infeed section having a portion 5 of reduced diameter and a conical portion 6 which provides a transition between the portion 5 and the main body 4 of the rotor. A pair of auger flights 7 is provided at the infeed section 5, 6 of each rotor 1 which serves to transfer crop material from the top end of a crop conveyor 8 (Figure 1) to the respective rotors 1.

Each rotor 1 has a threshing section 9 immediately following the infeed section 5, 6 and the threshing section is followed by a separating section 11. It is conventional to provide rasp bars in the threshing section of a rotor and separating bars differing from the rasp bars. The present rotors 1 are no exception to this and in order to provide for the provision of rasp bars 12 and 13 (seen generally in Figure 3 and in greater detail in Figures 9-13) rasp bar mounts 14 are provided at predetermined positions around the periphery of the threshing section of each rotor 1. The rasp bar mounts 14 are provided in pairs and further mounts 15 are also provided around the periphery of the rotor in predetermined positions both in the threshing section and the separating section of each rotor 1.

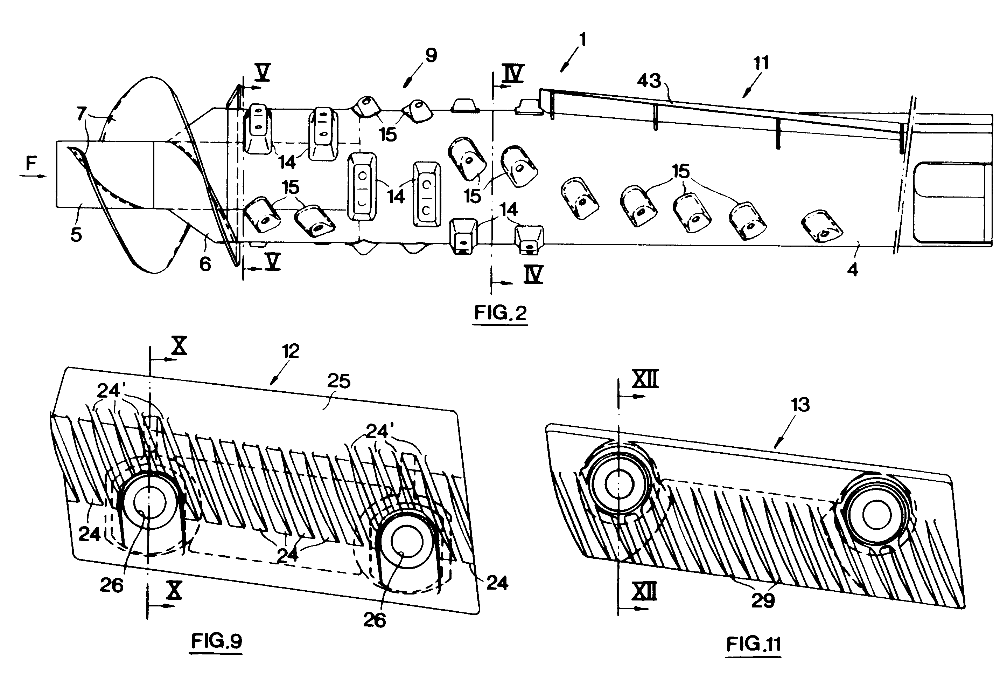

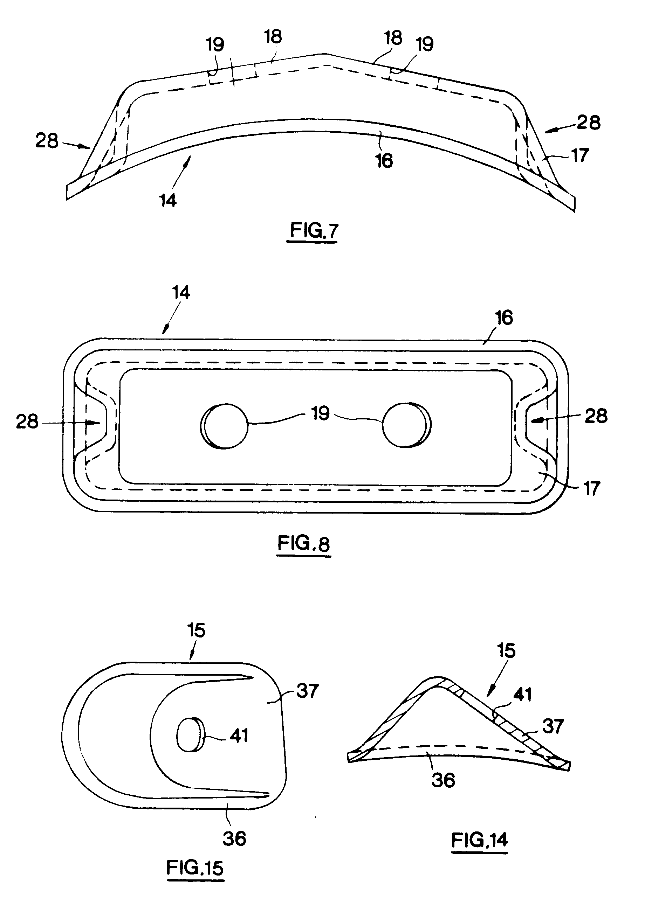

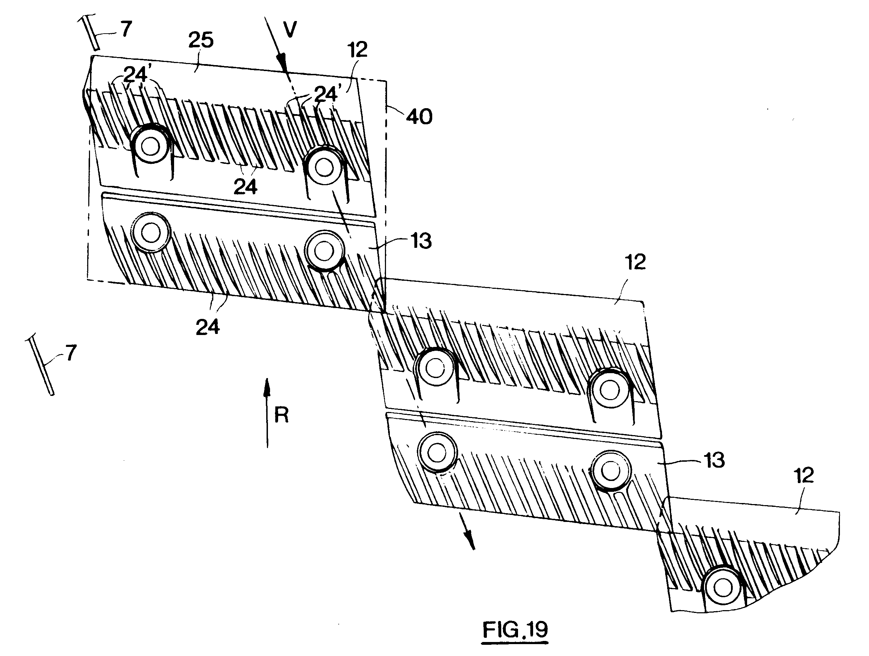

Referring more specifically to Figure 7, 8 and 13, each rasp bar mount 14 is preformed and is an elongated rectangle as seen in plan view and comprises an arcuate base 16 conforming to the periphery of the rotor on which each mount is secured by welding or other means. An actual rasp bar mounting member 17 is provided on the base 16 and has two inclined surfaces 18 which are apertured at 19. Weld nuts 21 are provided in alignment with each aperture 19 on the underside of each mounting surface 18. It will be seen that the overall height of each rasp bar mount 14 is relatively small (and less than the overall height of the rasp bars 12 and 13) so that each mount has a very low profile such that it will not interfere with the smooth flow of crop material relative to the rotor in use of the combine harvester even if no rasp bar is mounted thereon. In this respect, the corners of the mounting members 17 and bases 16 are rounded so as not to present any sharp edge to the crop material. As already mentioned, the rasp bar mounts 14 are provided in pairs and each pair may support a pair of rasp bars 12 and 13, the rasp bars 12 being leading rasp bars and the rasp bars 13 trailing rasp bars, with respect to the flow of crop material thereover which is indicated by arrow V in Figure 19 with the direction of rotation of the rotor 1 being indicated by arrow R. The angle between the mounting surfaces 18 of each rasp bar mount 14 is 160° in the illustrated embodiment and is related to the diameter of the rotor used. Indeed, each inclined surface 18 is generally perpendicular to the corresponding radius of the rotor 1 drawn through the aperture 19 provided in said surface 18. The foregoing has been found to give a very satisfactory performance, without being critical however. The rasp bar mounts 14 of a given pair are welded or otherwise attached to each rotor main body 4 in an offset manner as seen in Figure 2 of the drawings in order to incline the rasp bars 12 and 13 relative to the axis of each rotor 1 in order to assist in the helical movement of crop material around and along the rotor.

It should be noted that each rasp bar 12 and 13 is relatively deep compared to known rasp bars so as to compensate for the low profile (height) of the rasp bar mounts 14 in order that there is the optimal radial clearance between the rasp bars and the inner surfaces of the respective chambers 2. This combination of rasp bar and rasp bar mounts gives rise to one important feature of the invention described and claimed in EP-A-0,340,876, namely that the heads of bolts 22 securing the rasp bars 12 and 13 to the respective weld nuts 21 are located below (as seen in Figure 13) the lowermost operative surfaces 23 of the rasp bars which are in fact the surfaces between conventional raised fins or rasps 24, 29 of the rasp bars. Thus, the heads of the bolts 22 are not contacted by crop material in operation of the combine harvester and are thus not subjected to abrasive wear which is the case with existing designs resulting, in many instances, in making it impossible to remove bolts by applying a spanner to the heads thereof in view of the severe wearing away of the latter.

Looking in greater detail at the leading rasp bars 12, each is provided with a lead-in or ramp portion or ramp 25 which will be seen from Figure 13 of the drawings to extend to the periphery of the associated rotor 1 along its entire forward edge in order to close the gap between the rasp bar and the rotor so that there is no likelihood of crop material becoming trapped therein and building up so as eventually to plug the rotor. The lead-in portion 25 of each leading rasp bar 12 is smooth and the fins or rasps 24 are provided along the upper edge of this lead-in portion. Each rasp bar 12 is provided with two apertures 26 to receive the securing bolts 22, these apertures being provided through portions of the finned area of the rasp bar. In order to compensate for this diminution of the operative portion of the rasp bars 12, the fins 24 are extended forwardly at 24' in the area of the apertures 26 as best seen in Figures 9 and 19 of the drawings.

In order to mount a leading rasp bar across a pair of mounts 14, it is necessary merely to offer the rasp bar to these mounts and apply bolts 22 through the apertures 26 in the rasp bar and tighten the bolts into the respective weld nuts 21. In order to assist in the basic location of a rasp bar 12, the latter is provided with a pair of extensions 27 on the back of the lead-in portion 25, which extensions are received in respective indentations or dimples 28 in the adjacent edge of each mount 14. In this respect, each of the opposed and narrower sides or edges of the mounts 14 are provided with such an indentation or dimple 28 in order to avoid the need to ensure that a mount is the correct way round before attaching it to the rotor main body 4. The indentation 28 receiving one of the extensions 27 of a rasp bar 12 moreover provides an impact surface for more direct transfer of crop material impact forces on the lead-in portion 25 of the rasp bar 12 to the mounts 14. As such, less shearing forces are to be expected in the bolts 22 securing the rasp bars 12 to the mounts 14.

Turning now to the trailing rasp bars 13, these are of a different shape from the leading rasp bars 12, primarily because they do not require to have a lead-in portion and thus they comprise a basic rasp bar body provided with fins or rasps 29 and again, emphasis is laid on the fact that the rasp bars 13 are of a greater overall depth than conventional rasp bars in order that the heads of the bolts 22 can be located below the surfaces 23 inbetween the fins 29.

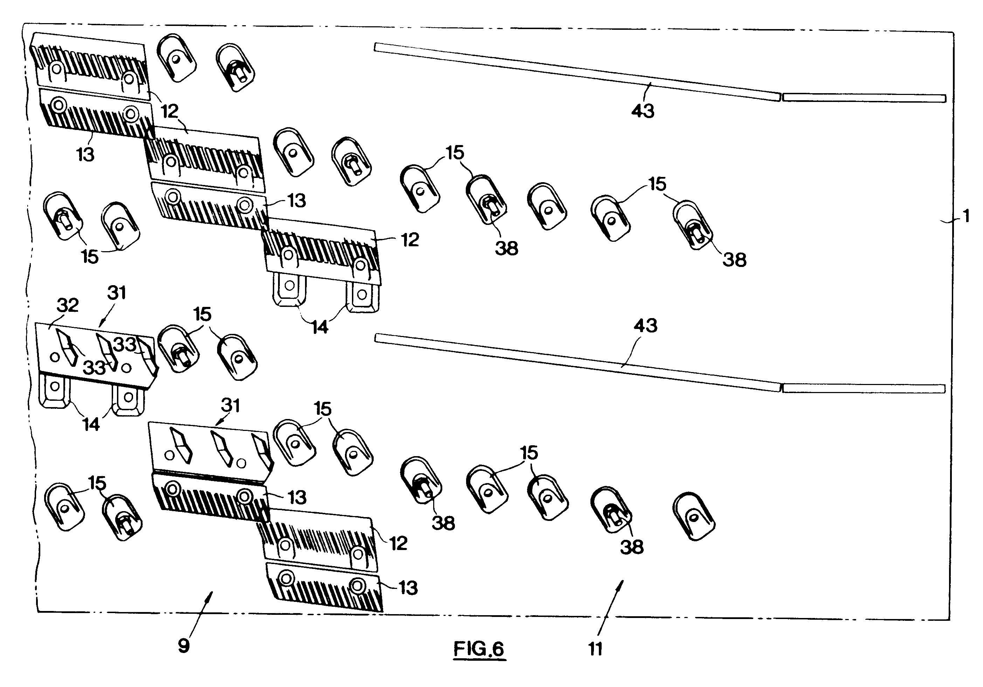

As seen in Figures 6 and 19 of the drawings, the trailing rasp bar 13 of one pair of rasp bars 12, 13 is arranged to overlap, both axially and circumferentially of the rotor, the leading rasp bar 12 of an adjacent pair of rasp bars. The rear edge of each trailing rasp bar 13 is cut away at 30 in order to accommodate therebeneath the leading rasp bar 13 of an adjacent pair of rasp bars 12, 13 staggered axially of the associated rotor 1. This double overlapping of adjacent leading and trailing rasp bars 12, 13 ensures that there are no gaps which could otherwise trap crop material and cause hesitation of crop flow, possibly leading to eventual plugging of the rotor. Rasp bars have normally been a substantially regular rectangle, as seen in plan view, with the result that the front and rear edges thereof have been extending generally diametrally of the associated rotor 1 as shown in chain lines at 40 in Figure 19. However, the present rasp bars 12 and 13 are of a more parallelogram form, as seen in plan view whereby the forward and rearward edges are inclined to a diametral plan of the rotor 1 so as to extend more concurrent with the direction of the flow V of crop material. Accordingly, the helical path of crop material over and across the rotor 1 is less disturbed by the front edge of the parallelogram type rasp bars 12, 13 than with the conventional substantially rectangular rasp bars used up till now. The foregoing particularly can be observed at the transition area between the infeed section 5, 6 and the threshing section 9 of the rotor 1. Referring to Figure 19, it can be seen that the free space between the auger flights 7 at the discharge end of the infeed section 5, 6 is almost fully closed off by the conventional rectangular rasp bars, obstructing a smooth take-over of crop material presented to the threshing section 9. In contrast therewith and due to the parallelogram form of the rasp bars of the present invention, the transition area is freed to some extent ensuring a smoother flow of crop material from the infeed section 5, 6 to the threshing section 9.

As illustrated in Figure 6 of the drawings, the provision of permanent mounts 14 and 15 for crop operating elements enables the format of a given rotor to be modified in order to suit various crop types and crop conditions as further described in EP-A-0,340,876 referred to above. The arrangement illustrated in Figure 6 of the drawings is merely by way of giving examples of the different types of crop operating members which may be employed and does not necessarily illustrate one format of rotor which may be used. As regards the mounts 14, it will be seen that these may be fitted with rasp bars 12 and 13, as already described, although one or more leading or trailing rasp bars may be omitted if desired in order to reduce the threshing action which is usually desirable when harvesting beans, for example. Alternatively, one or more leading rasp bars 12 may be replaced by a crop operating element 31 (Figure 18) which is a composite thinning element in the sense that it serves to cut or thin the mat of crop material prior to it being threshed in order that the threshing operation can be optimised. The thinning elements 31 comprise a base plate 32 on which a plurality of blades 33 are mounted which have a lead-in edge 34 and a generally V-shaped top edge 35. It will be appreciated that other types of thinning elements may be provided as required.

As best seen in Figures 16 and 17, the further mounts 15 also comprise an arcuate base 36 which, as with the base 16 of the mounts 14, conforms to the periphery of the associated tube 4 of the rotor 1. As seen in plan view, this base 36 of each further mount 15 is also an elongated rectangle and is provided with an actual mounting surface 37 for a crop operating member in the form of a thinning rod 38 which is threaded at one end in order to be received by a weld nut 39 provided on the underside of the mounting surface 37 in alignment with an aperture 41 therein. The thinning rods 38 need to be mounted both so as to trail with respect to the direction of rotation of the associated rotor 1 and also to point towards the rear end of the rotor. Thus, the mounting surface 37 is inclined in two planes and in the illustrated embodiment the inclination in one plane is such as to impart a trailing angle of 30° for each thinning rod 38, and an angle of 32° towards the rear end of the rotor. The thinning rod 38 in fact is inclined rearwardly with an angle of 30° when seen in the direction of rotation and with respect to the radius of the rotor 1 passing through the bottom end of said thinning rod 38, as seen in Figure 16. The angle of 32° is the angle between the longitudinal axis of the further mount 15 and the diametral plane of the rotor which that axis meets, as illustrated in Figure 17. It should be appreciated that these angles of 30° and 32°, though of primary importance, are not critical. Each thinning rod 38 is provided with an hexagonal flange 42 immediately adjacent the threaded end portion in order that a spanner can be used to mount and dismount the rod in a mount 15. In this respect, a socket spanner can be used which is particularly advantageous in cases where the separating concaves are not removable because it is possible to mount and dismount the thinning rods through the mesh of those concaves which is a distinct advantage. Otherwise, the rotor 1 and/or casing 2 has to be removed for servicing said thinning rods. In machines where the separator concaves are hingedly attached to the rotor casing 2, then there is no problem in this respect. It is normal to provide removable threshing concaves.

As already mentioned, and as seen in Figures 2, 3 and 6 a number of further mounts 15 are disposed around the periphery of each rotor 1 and Figures 3 and 6 show the provision of thinning rods 38 on some of these mounts and not on others. Again, the illustrated arrangement in this respect is merely by way of example but serves to show that a desired format of thinning rods can be used without any fear of the unused mounts 15 interfering in any way with the flow of crop material because, as with the mounts 14, the further mounts 15 have a low profile and rounded edges.

In the separating section of each rotor 1, there are also provided conventional separating bars 43 as well as a number of further mounts 15.

The axial overlapping of adjacent threshing means, as opposed to axial staggering thereof, in accordance with the present invention has been found to help considerably in providing an optimum threshing configuration for smooth crop flow, low grain loss, minimum crop damage, and lower power consumption. With crops having long straws, the present invention results in less hesitation in crop flow, less crop "hits" (thus reducing hammering which can cause great operator discomfort) and a greater efficiency. The overlapping threshing means also provides a smoother transition between staggered mounting means with a reduced catching or trapping of crop material in the transition area. Indeed, when the conventional rectangular rasp bars are employed, which are staggered but not overlapping, a "hairpinning" effect is to be expected, which means that long straw crops, and especially the larger head portions thereof, have a tendency to get pinched in the gap or V-pocket inbetween two adjacent staggered rasp bars, causing the straw to be pulled diametrally of the rotor instead of following a spiral path for optimum crop flow. Also, the front edge of the conventional rectangular rasp bars form an obstruction for the spiral flow of crop material. This rasp bar "end effect" is greatly reduced by the parallelogram form of the present rasp bars which provides a rasp bar front edge more aligned with the spiral path of the crop relative to the rasp bars.

## Claims

1. An axial flow harvesting machine comprising at least one generally cylindrical rotor (1) mounted within a casing (2); said rotor (1) having a plurality of threshing means (12, 13) around its periphery with adjacent ones of said threshing means (12, 13) being staggered both axially and circumferentially of the rotor (1) and said rotor (1) together with said threshing means (12, 13) thereon being operable, in conjunction with said casing (2), to thresh and separate grain from straw material and
said harvesting machine being characterized in that adjacent threshing means (12, 13) overlap both axially and circumferentially of said rotor (1).

2. A harvesting machine according to claim 1, characterised in that the threshing means are in the form of pairs of leading (12) and trailing (13) rasp bars with the trailing rasp bar (13) of one pair overlapping the leading rasp bar (12) of an adjacent pair both axially and circumferentially of the associated rotor (1).

3. A harvesting machine according to claim 2, characterised in that the rear edge of each trailing rasp bar (13) is cut away (30) to accommodate the adjacent leading rasp bar (12) therebeneath.

4. A harvesting machine according to claim 2 or 3, characterised in that each leading and trailing rasp bar (12, 13) is generally of parallelogram form as seen in plan view and mounted on the associated rotor (1) at an angle inclined to the axis thereof, whereby the front and rear edges extend generally diametrally of the associated rotor.

5. A harvesting machine according to any of the preceding claims, characterised in that it further comprises a plurality of mounting means (14, 15) for the threshing means (12, 13) and other crop operating members (31, 38); said mounting means (14, 15) being permanently provided at predetermined positions over the periphery of the rotor (1) and the height of each mounting means (14, 15) being less than the height of the threshing means or other crop operating members (12, 13, 31, 38) mountable thereon.

6. A harvesting machine according to claim 5, characterised in that the mounting means (14, 15) have mounting surfaces (18, 33) oriented in a predetermined manner, whereby, when members (12, 13, 31, 38) are mounted thereon for operating on the crop material, those members are automatically oriented in the correct manner.

7. A harvesting machine according to claim 5 or 6, characterised in that the mounting means (14, 15) are separate members attached to the rotor (1).

8. A harvesting machine according to claim 5 or 6, characterised in that the mounting means (14, 15) are provided integrally with the rotor.

9. A harvesting machine according to claim 8, characterised in that the mounting means (14, 15) are in the form of indentations in the main body (4) of each rotor (1).

10. A harvesting machine, according to claim 8, characterised in that the mounting means (14, 15) are in the form of raised mounts with respect to the main body (4) of each rotor (1).

11. A harvesting machine according to any of claims 1 to 7, characterised in that each mounting means (14, 15) has an elongated rectangular base (16, 36) which conforms to the periphery of the main body (4) of the rotor (1) on which it is mounted, with the longitudinal axis of the base being directed generally circumferentially of the rotor.

12. A harvesting machine according to any of the preceding claims, characterised in that pairs of mounting means (14) are provided to receive crop operating members (12, 13, 31) which span the pair of mounting means.

13. A harvesting machine according to claim 12, characterised in that the mounting means (14) of a given pair are offset from one another circumferentially of the associated rotor (1) so as to incline the crop operating members (12, 13, 31) mounted thereon with respect to the longitudinal axis of the rotor.

14. A harvesting machine according to claim 12 or 13, characterised in that the mounting means (14) of each pair each have mounting surfaces (18) inclined with respect to each other so as to be capable of having a pair of crop operating members (12, 13, 31) mounted thereon.

15. A harvesting machine according to claim 9, characterised in that each mounting surface (18) of the mounting means (14) is generally perpendicular to the radius of the rotor (1) drawn through the corresponding aperture (19) provided in said surface (18) so as to assure a radial bolting direction of the crop operating members (12, 13, 31) onto the rotor (1).

16. A harvesting machine according to any of claims 12 to 15, characterised in that the mounting means (14) of each pair are provided with means (28) cooperable with means (27) on the crop operating elements to locate the latter.

17. A harvesting machine according to any of claims 12 to 16, characterised in that each mounting surface (18) of the mounting means (14) of each pair are apertured (19) and fitted with a weld nut (21) in alignment with the associated aperture (19) to facilitate mounting and removal of crop operating members (12, 13, 31).

18. A harvesting machine according to claim 17, characterised in that the crop operating members are rasp bars (12), in that the apertures (19) extend through the rasps (24), and in that the affected rasps are extended (24') in order to preserve substantially the same threshing capability as the unaffected rasps (24).

19. A harvesting machine according to claim 18, wherein leading (12) and trailing (13) rasp bars are provided, each leading rasp bar having a lead-in edge (25) extending from the rasps (24) to the periphery of the main body (4) of the associated rotor (1).

20. A harvesting machine according to claims 18 or 19, characterised in that means (22) for securing the leading and trailing rasp bars (12, 13) to the mounting means (14) are shielded from contact with crop material, in use of the machine, whereby the securing means (22) are not subjected to wear.

21. A harvesting machine according to any of claims 5 to 20, characterised in that each mounting means (14,15) is provided with rounded edges.

22. A harvesting machine according to any of claims 5 to 21, characterised in that some of the mounting means (15) are formed so as to receive single crop operating members in the form of crop thinning rods (38), said mounting means each comprising a mounting surface (37) which is inclined in two planes so as to orient a thinning rod (38) mounted thereon in a direction which trails, with respect to the direction of rotation of the associated rotor (1) and in a direction towards the rear end of that rotor.

23. A harvesting machine according to claim 22 characterised in that each mounting surface (37) is apertured (41) and is fitted on the underside with a weld nut (39) in alignment with the aperture (41) to facilitate mounting and removal of a crop thinning rod (38).

## Patentansprüche

1. Axialfluß-Erntemaschine mit zumindestens einem allgemein zylindrischen Rotor (1), der in einem Gehäuse (2) angeordnet ist, wobei der Rotor (1) eine Vielzahl von Drescheinrichtungen (12, 13) um seinen Umfang herum aufweist und benachbarte der Drescheinrichtungen (12, 13) sowohl in Axialrichtung als auch in Umfangsrichtung des Rotors (1) gegeneinander versetzt angeordnet sind, und wobei der Rotor (1) zusammen mit den daran angeordneten Drescheinrichtungen (12, 13) in Verbindung mit dem Gehäuse betreibbar ist, um Körner aus Strohmaterial zu dreschen und von diesen zu trennen,
wobei die Erntemaschine dadurch gekennzeichnet ist, daß benachbarte Drescheinrichtungen (12, 13) einander sowohl in Axialrichtung als auch in Umfangsrichtung des Rotors (1) überlappen.

2. Erntemaschine nach Anspruch 1,
dadurch gekennzeichnet, daß die Drescheinrichtungen die Form von Paaren von voreilenden (12) und nacheilenden (13) Schlagleisten aufweisen, wobei die nacheilende Schlagleiste (13) eines Paares die voreilende Schlagleiste (12) eines benachbarten Paares sowohl in Axialrichtung als auch in Umfangsrichtung des zugehörigen Rotors überlappt.

3. Erntemaschine nach Anspruch 2,
dadurch gekennzeichnet, daß die Hinterkante jeder nacheilenden Schlagleiste (13) fortgeschnitten ist (30), um die benachbarte voreilende Schlagleiste (12) darunter aufzunehmen.

4. Erntemaschine nach Anspruch 2 oder 3,
dadurch gekennzeichnet, daß jede voreilende und nacheilende Schlagleiste (12, 13) bei Betrachtung in Draufsicht allgemein Parallelogrammform aufweist und an dem zugehörigen Rotor (1) unter einem gegenüber dessen Achse geneigten Winkel befestigt ist, so daß die Vorder- und Hinterkanten sich allgemein in Diametralrichtung des zugehörigen Rotors erstrecken.

5. Erntemaschine nach einem der vorhergehenden Ansprüche,
dadurch gekennzeichnet, daß sie weiterhin eine Vielzahl von Befestigungsteilen (14, 15) für die Drescheinrichtungen (12, 13) und andere auf das Erntematerial einwirkende Elemente (31, 38) aufweist, daß die Befestigungsteile (14, 15) dauerhaft an vorgegebenen Positionen über den Umfang des Rotors (1) verteilt vorgesehen sind, und daß die Höhe jedes Befestigungsteils (14, 15) kleiner als die Höhe der Drescheinrichtungen oder anderer daran befestigbarer, auf das Erntematerial einwirkender Elemente (12, 13, 31, 38) ist.

6. Erntemaschine nach Anspruch 5,
dadurch gekennzeichnet, daß die Befestigungsteile (14, 15) Befestigungsoberflächen (18, 33) aufweisen, die in einer vorgegebenen Weise ausgerichtet sind, so daß, wenn Teile (12, 13, 31, 38) an diesen für eine Einwirkung auf das Erntematerial befestigt sind, diese Teile automatisch in der richtigen Weise ausgerichtet sind.

7. Erntemaschine nach Anspruch 5 oder 6,
dadurch gekennzeichnet, daß die Befestigungsteile (14, 15) getrennte, an dem Rotor (1) befestigte Teile sind.

8. Erntemaschine nach Anspruch 5 oder 6,
dadurch gekennzeichnet, daß die Befestigungsteile (14, 15) einstückig mit dem Rotor ausgebildet sind.

9. Erntemaschine nach Anspruch 8,
dadurch gekennzeichnet, daß die Befestigungsteile (14, 15) die Form von Vertiefungen in dem Hauptkörper (4) jedes Rotors aufweisen.

10. Erntemaschine nach Anspruch 8,
dadurch gekennzeichnet, daß die Befestigungsteile (14, 15) die Form von erhabenen Befestigungen gegenüber dem Hauptkörper (4) jedes Rotors aufweisen.

11. Erntemaschine nach einem der Ansprüche 1 bis 7,
dadurch gekennzeichnet, daß jedes Befestigungsteil (14, 15) ein langgestrecktes rechtwinkliges Basisteil (16, 36) aufweist, das in seiner Form an den Umfang des Hauptkörpers (4) des Rotors (1) angpaßt ist, an dem es befestigt ist, wobei die Längsachse des Basisteils allgemein in Umfangsrichtung des Rotors gerichtet ist.

12. Erntemaschine nach einem der vorhergehenden Ansprüche,
dadurch gekennzeichnet, daß Paare von Befestigungsteilen (14) vorgesehen sind, um auf das Erntematerial einwirkende Teile (12, 13, 31) aufzunehmen, die das Paar von Befestigungsteilen überspannen.

13. Erntemaschine nach Anspruch 12,
dadsurch gekennzeichnet, daß die Befestigungsteile (14) eines vorgegebenen Paares gegeneinander in Umfangsrichtung des zugehörigen Rotors (1) versetzt sind, so daß die auf das Erntematerial einwirkenden und daran befestigten Teile (12, 13, 31) gegenüber der Längsachse des Rotors geneigt sind.

14. Erntemaschine nach Anspruch 12 oder 13,
dadurch gekennzeichnet, daß die Befestigungsteile (14) jedes Paares jeweils Befestigungsoberflächen (18) aufweisen, die gegeneinander geneigt sind, so daß zwei auf das Erntematerial einwirkende Teile (12, 13, 31) daran befestigbar sind.

15. Erntemaschine nach Anspruch 9,
dadurch gekennzeichnet, daß jede Befestigungsoberfläche (18) der Befestigungsteile (14) allgemein senkrecht zum Radius des Rotors ist, der durch eine entsprechende Öffnung (19) gezogen wird, die in der Oberfläche (19) vorgesehen ist, so daß eine radiale Schraubbefestigungsrichtung der auf das Erntematerial einwirkenden Teile (12, 13, 31) auf den Rotor sichergestellt ist.

16. Erntemaschine nach einem der Ansprüche 12 bis 15,
dadurch gekennzeichnet, daß die Befestigungsteile (14) jedes Paares mit Einrichtungen (28) versehen sind, die mit Einrichtungen (27) auf den auf das Erntematerial einwirkenden Elementen zusammenwirken können, um diese hinsichtlich ihrer Lage festzulegen.

17. Erntemaschine nach einem der Ansprüche 12 bis 16,
dadurch gekennzeichnet, daß jede Befestigungsoberfläche (18) der Befestigungsteile (14) jedes Paares eine Öffnung (19) aufweist und mit einer Schweißmutter (21) in Ausrichtung mit der zugehörigen Öffnung (19) versehen ist, um die Befestigung und Entfernung von auf das Erntematerial einwirkenden Elementen (12, 13, 31) zu erleichtern.

18. Erntemaschine nach Anspruch 17,
dadurch gekennzeichnet, daß die auf das Erntematerial einwirkenden Teile Schlagleisten (12) sind, daß sich die Öffnungen (19) durch die Schlagrippen (24) hindurcherstrecken, und daß die betroffenen Schlagrippen erweitert sind (24'), um im wesentlichen die gleiche Dreschleistung beizubehalten, wie die von unbetroffenen Schlagrippen (24).

19. Erntemaschine nach Anspruch 18, bei der voreilende (12) und nacheilende (13) Schlagleisten vorgesehen sind, und bei der voreilende Schlagleisten eine Einführungskante (25) aufweisen, die sich von den Schlagleisten (24) zum Umfang des Hauptkörpers (4) des zugehörigen Rotors (1) erstrecken.

20. Erntemaschine nach den Ansprüchen 18 oder 19,
dadurch gekennzeichnet, daß Einrichtungen (22) zur Befestigung der voreilenden und nacheilenden Schlagleisten (12, 19) an den Befestigungsteilen (14) im Betrieb der Maschine gegenüber einer Berührung mit dem Erntematerial abgeschirmt sind, so daß die Befestigungseinrichtugen (22) keiner Abnutzung unterworfen sind.

21. Erntemaschine nach einem der Ansprüche 5 bis 20,
dadurch gekennzeichnet, daß jedes Befestigungsteil (14, 15) mit abgerundeten Kanten versehen ist.

22. Erntemaschine nach einem der Ansprüche 5 bis 21,
dadurch gekennzeichnet, daß einige der Befestigungsteile (15) so geformt sind, daß sie einzelne auf das Erntematerial einwirkende Teile in Form von Erntematerial-Ausdünnungsstangen (38) aufnehmen, daß die Befestigungsteile jeweils eine Befestigungsoberfläche (37) aufweisen, die in zwei Ebenen geneigt ist, um eine daran befestigte Ausdünnungsstange (38) in einer Richtung auszurichten, die bezüglich der Drehrichtung des zugehörigen Rotors (1) und in einer Richtung auf das hintere Ende dieses Rotors nacheilt.

23. Erntemaschine nach Anspruch 22,
dadurch gekennzeichnet, daß jede Befestigungsoberfläche (37) eine Öffnung (41) aufweist und an der Unterseite mit einer Schweißmutter (39) in Ausrichtung mit der Öffnung (41) versehen ist, um die Befestigung und Entfernung einer Erntematerial-Ausdünnungsstange (38) zu erleichtern.

## Revendications

1. Moissonneuse à écoulement axial équipée d'au moins un rotor sensiblement cylindrique (1) monté à l'intérieur d'un carter (2); ledit rotor (1) comportant plusieurs moyens de battage (12, 13) disposés autour de sa périphérie, des moyens de battage adjacents desdits moyens de battage (12, 13) étant décalés à la fois axialement et circonférentiellement par rapport au rotor (1), tandis que ledit rotor (1) ainsi que lesdits moyens de battage (12, 13) disposés sur lui sont aptes à agir pour, en association avec ledit carter (2), battre et séparer du grain de matières pailleuses, et
ladite moissonneuse étant caractérisée en ce que les moyens de battage adjacents (12, 13) se chevauchent à la fois axialement et circonférentiellement par rapport audit rotor (1).

2. Moissonneuse selon la revendication 1, caractérisée en ce que les moyens de battage se présentent sous la forme de paires de battes striées avant (12) et arrière (13), la batte striée arrière (13) d'une paire chevauchant la batte striée avant (12) d'une paire adjacente à la fois axialement et circonférentiellement par rapport au rotor (1) associé.

3. Moissonneuse selon la revendication 2, caractérisée en ce que le bord arrière de chaque batte striée arrière (13) présente une découpe (30) pour recevoir au-dessous d'elle la batte striée avant (12) adjacente.

4. Moissonneuse selon la revendication 2 ou 3, caractérisée en ce que chacune des battes striées avant et arrière (12, 13) a, dans l'ensemble, lorsqu'on la considère en vue en plan, la forme d'un parallélogramme et est montée sur le rotor (1) associé suivant un angle incliné par rapport à l'axe de celui-ci, pour qu'ainsi les bords avant et arrière s'étendent, d'une manière générale, diamétralement par rapport au rotor associé.

5. Moissonneuse selon l'une quelconque des revendications précédentes, caractérisée en ce qu'elle comporte également plusieurs moyens de montage (14, 15) pour les moyens de battage (12, 13) et d'autres organes (31, 38) agissant sur la récolte; lesdits moyens de montage (14, 15) étant prévus d'une manière permanente au niveau de positions prédéterminées sur la périphérie du rotor (1) et la hauteur de chacun des moyens de montage (14, 15) étant inférieure à la hauteur des moyens de battage ou d'autres moyens (12, 13, 31, 38) agissant sur la récolte et aptes à être montés sur eux.

6. Moissonneuse selon la revendication 5, caractérisée en ce que les moyens de montage (14, 15) ont des surfaces de montage (18, 33) orientées d'une manière prédéterminée pour qu'ainsi, lorsque les organes (12, 13, 31, 38) sont montés sur eux pour agir sur les produits de récolte, ces organes soient automatiquement orientée selon la manière correcte.

7. Moissonneuse selon la revendication 5 ou 6, caractérisée en ce que les moyens de montage (14, 15) sont des organes séparés, fixés au rotor (1).

8. Moissonneuse selon la revendication 5 ou 6, caractérisée en ce que les moyens de montage (14, 15) sont conçus d'une manière solidaire avec le rotor.

9. Moissonneuse selon la revendication 8, caractérisée en ce que les moyens de montage (14, 15) se présentent sous la forme de renfoncements définis dans le corps principal (4) de chaque rotor (1).

10. Moissonneuse selon la revendication 8, caractérisée en ce que les moyens de montage (14, 15) se présentent sous la forme de dispositifs de montage surélevés par rapport au corps principal (4) de chaque rotor (1).

11. Moissonneuse selon l'une quelconque des revendications 1 à 7, caractérisée en ce que chaque moyen de montage (14, 15) possède une base rectangulaire allongée (16, 36) qui épouse la forme de la périphérie du corps principal (4) du rotor (1) sur lequel il est monté, l'axe longitudinal de la base étant dirigé, d'une manière générale, circonférentiellement par rapport au rotor.

12. Moissonneuse selon l'une quelconque des revendications précédentes, caractérisée en ce qu'il est prévu des paires de moyens de montage (14) pour recevoir des organes (12, 13, 31) agissant sur la récolte qui chevauchent la paire de moyens de montage.

13. Moissonneuse selon la revendication 12, caractérisée en ce que les moyens de montage (14) d'une paire donnée sont décalés entre eux circonférentiellement par rapport au rotor (1) associé, de façon à incliner les organes (12, 13, 31) agissant sur la récolte qui sont montés sur eux, par rapport à l'axe longitudinal du rotor.

14. Moissonneuse selon la revendication 12 ou 13, caractérisée en ce que les moyens de montage (14) de chaque paire possèdent respectivement des surfaces de montage (18) inclinées l'une par rapport à l'autre pour pouvoir avoir deux organes (12, 13, 31) agissant sur la récolte, montés sur elles.

15. Moissonneuse selon la revendication 9, caractérisée en ce que chaque surface de montage (18) des moyens de montage (14) est, d'une manière générale, perpendiculaire au rayon du rotor (1) tracé à travers l'orifice (19) correspondant défini dans ladite surface (18), afin d'assurer une direction de boulonnage radiale des organes (12, 13, 31) agissant sur la récolte, sur le rotor (1).

16. Moissonneuse selon l'une quelconque des revendications 12 à 15, caractérisée en ce que les moyens de montage (14) de chaque paire sont pourvus de moyens (28) aptes à coopérer avec des moyens (27) prévus sur les éléments agissant sur la récolte, pour positionner ces derniers.

17. Moissonneuse selon l'une quelconque des revendications 12 à 16, caractérisée en ce que chaque surface de montage (18) des moyens de montage (14) de chaque paire est pourvue d'orifices (19) et munie d'un écrou soudé (21) en alignement avec l'orifice (19) associé pour faciliter un montage et un démontage des organes (12, 13, 31) agissant sur la récolte.

18. Moissonneuse selon la revendication 17, caractérisée en ce que les organes agissant sur la récolte sont des battes striées (12), en ce que les orifices (19) s'étendent à travers des stries (24), et en ce que les stries concernées présentent des prolongements (24') afin de conserver sensiblement la même capacité de battage que les stries (24) non concernées.

19. Moissonneuse selon la revendication 18, dans laquelle il est prévu des battes striées avant (12) et arrière (13), chaque batte striée avant présentant un bord d'attaque (25) qui s'étend depuis les stries (24) jusqu'à la périphérie du corps principal (4) du rotor (1) associé.

20. Moissonneuse selon la revendication 18 ou 19, caractérisée en ce que des moyens (22) destinés à assujettir les battes striées avant et arrière (12, 13) aux moyens de montage (14) sont protégés contre un contact avec des produits de récolte, lorsque la machine est en service, pour qu'ainsi les moyens d'assujettissement (22) ne soient pas soumis à une usure.

21. Moissonneuse selon l'une quelconque des revendications 5 à 20, caractérisée en ce que chacun des moyens de montage (14, 15) est pourvu de bords arrondis.

22. Moissonneuse selon l'une quelconque des revendications 5 à 21, caractérisée en ce que certains des moyens de montage (15) sont conformés de manière à recevoir des organes agissant sur la récolte uniques sous la forme de tiges d'éclaircissage de récolte (38), chacun desdits moyens de montage comportant une surface de montage (37) inclinée dans deux plans afin d'orienter une tige d'éclaircissage (38) montée sur lui, dans une direction située en arrière, par rapport au sens de rotation du rotor (1) associé et dans une direction orientée vers l'extrémité arrière de ce rotor.

23. Moissonneuse selon la revendication 22, caractérisée en ce que chaque surface de montage (37) possède un orifice (41) et est munie, sur sa face de dessous, d'un écrou soudé (39) en alignement avec l'orifice (41) pour faciliter un montage et un démontage d'une tige d'éclaircissage de récolte (38).
